# EUROPEAN PATENT APPLICATION

(11) **EP 0 967 259 A1**
(43) Date of publication of application: **29.12.1999**
(21) Application number: 99111907.4
(22) Date of filing: 21.06.1999
(51) Int. Cl.: C09G 1/02

(54) **A polishing compound and a method for polishing**

(30) Priority: 25.06.1998 JP 17857898
(71) Applicant: Speedfam Co., Ltd., Kanagawa 252-1123 (JP)
(72) Inventor: Yoshida, Akitoshi, Chiba-city, Chiba-pref. 260-0851 (JP); Ogawa, Yoshihisa, Chiba-city, Chiba-pref. 260-0003 (JP); Tanaka,, Hiroaki, Narashino-city, Chiba-pref. 275-0026 (JP)
(74) Representative: Kraus, Walter, Dr.

(57) **Abstract**

The present invention is a polishing compound comprising, colloidal solution containing 1∼15 % by weight (wt.%) of 8∼500 nm average diameter silicon oxide particles, said colloidal solution is prepared as a buffer solution which has buffering action between pH 8.7∼10.6 by adding a combination of weak acid and hydroxide of alkali metal or ammonia, wherein logarithms of reciprocal number of acid dissociation constant at 25°C of said weak acid is 8.0∼12.0. Further, the present invention is a polishing method of a silicon wafer by said polishing compound.

## Description

### BACK GROUND OF THE INVENTION

### DETAILED DESCRIPTION OF THE INVENTION

### FIELD OF THE INVENTION

This invention relates to a polishing compound used for the surface polishing of the semiconductor substrate composed by a silicon wafer or a wafer of compound semiconductor, which does not contaminate the environment and does not corrode metal, and a method to prepare said polishing compound. Further, this invention relates to a polishing method using said polishing compound. More in detail, this invention relates to a polishing compound which has a buffer action, large electrical conductivity and does not contain amines.

### DESCRIPTION OF THE PRIOR ART

Usually, as the polishing compound which processes the surface of work-piece of semiconductor substrate such as a silicon wafer or a wafer of compound semiconductor (hereinafter shortened to wafers), a suspension in which fine particles of silicon oxide or hydrate of it are dispersed by colloidal state, so-called colloidal silica, is commonly used. At the actual polishing use, a work-piece is placed on the surface of a platen whose surface is tightly covered with a polishing pad composed of a foamed plastic or a suede type synthetic leather, and press the work-piece against the platen which is rotated by the constant speed and by the constant supply of the polishing compound. The term of polishing of this invention indicates a pro-polishing or a polishing process of wafers which are previously processed by a lapping process and then by an etching process to obtain a mirror finished surface, and a CMP (chemical-mechanical polishing) process of a device substrate.

For the pre-polishing process, a double sided-polishing machine having an upper and a lower platen whose surface are covered by a thin layer of non-woven cloth is commonly used, meanwhile for the polishing process, a double sided polishing machine or a single sided polishing machine whose surfaces are covered by a thin layer of polishing pad composed of a foamed plastic or a suede type synthetic leather is commonly used. And, for the CMP process, a single sided polishing machine whose surface is covered by a thin layer of polishing pad composed by a slightly hard type foamed plastic is commonly used. At the actual use, the polishing is carried out by pressing the work-piece against the platen which rotates by constant speed, and providing the aqueous dispersion of polishing compound containing fine particles of silicon oxide.

As the polishing compound, the aqueous dispersion prepared by dispersing the fine particles of colloidal silica in an alkaline solution as disclosed in USP3,328,141 is commonly used. The pre-polishing and polishing process are different from the previous process based on so-called mechanical processing which uses for instance a diamond grinding stone or hard abrasives of aluminum oxide. The feature of the pre-polishing and polishing process is to utilize the chemical effect of alkali to a silicon wafer, concretely utilize a corroding effect of alkali to a silicon wafer. That is, by the corroding effect of alkali, a thin soft corrosion layer is formed on the surface of a silicon wafer. The formed corrosion layer is removed by a mechanical action of fine particles of colloidal silica, thus the polishing is progressed. As mentioned above, since the polishing is progressed by the chemical action of alkaline component contained in the solution, it is necessary to maintain pH of the solution of polishing compound within the region bigger than 7. That is, when pH of the solution becomes closer to 7 which indicates the neutral region, the chemical action becomes weak and the removing rate falls down. Further, when pH of the solution becomes closer to 14 which indicates strong alkali region, the chemical action becomes strong and the removing rate is improved.

Therefore, in a case of this kind of polishing, the chemical and physical feature of the solution of polishing compound is very important. That is, the surface of the silicon wafer is corroded by an alkaline component and a thin corrosion layer is formed. The thickness and the hardness of the thin corrosion layer is largely effected by features of the solution of polishing compound. Since the electro chemical feature of the solution of polishing compound have strong influence to the thickness and the hardness, it is very important to keep pH of the solution in a stabilized region. If pH of the solution is easily affected by a change of external conditions such as heat, contact with outside air or contamination from outside, thickness of the layer, speed for corroding, consistency of the layer and removing speed of the layer fluctuate delicately, and it is difficult to expect a precise and a homogeneous polishing results. Further, since said corrosion layer is removed by the mechanical action of the particles of colloidal silicon oxide abrasives contained in polishing compound, it is necessary that these particles have adequate diameter and not to be easily broken or not to cohere and form gel. That is, particles of silicon oxide remove the corrosion layer formed by an alkaline component effectively by a mechanical action. Therefore, the polishing compound must not be a compound which gives bad influence to the mirror finished surface after the corrosion layer is removed.

Up to the present, many kinds of compound are proposed as a polishing compound of a silicone wafer. For instance, silica sol and silica gel are proposed as a polishing compound in USP 3,170,273. Further, the technique that the removing speed can be improved by adjusting pH of the colloidal solution within the region from 10.5 to 12.5 is disclosed in USP 3,328,141. In Japanese Patent Laid Open Publication 2-158684, a polishing compound composed by water, colloidal silica, water soluble polymer having molecular weight of bibber than 100,000 and water soluble salts is disclosed. The important point of these disclosed methods is to improve the dispersing ability of a polishing compound and to improve the stability of polishing force by adding many kinds of additives to an alkaline base solution in which fine abrasives of colloidal silica or silica sol are dispersed, and is not to improve the removing speed of the conventional polishing compound so remarkably.

Since a pre-polishing or a polishing process basically uses above mentioned polishing compound, the polishing speed is slow and productivity is not sufficient, further, since pH is changeable because it is easily affected by external conditions, polishing force lacks of consistency. Namely, these pre-polishing or polishing processes can be said as a process which takes long time and as a troublesome process, and can not be said as a complete method. Meanwhile, with the advancement of integrated circuit and the improvement of wafer diameter, a higher precise accuracy requirement for surface flatness of a silicon wafer or a substrate of semiconductor device is becoming important. Further, to improve the productivity, a polishing compound and a polishing method which accomplishes the higher removal speed are earnestly expected. In USP 4,169,337, a method to improve the polishing speed by the addition of amines is disclosed. Further, in the Japanese Patent Laid Open Publication 5-154760, a method for polishing by the use of a polishing compound containing 10∼80 wt.% of piperazine which is a kind of water soluble amines to silica of silica gel or silica sol is disclosed. However, amines easily form complex with transition metal elements and corrode the metal composing polishing equipment gradually, further the formed metal complex have a tendency to contaminate the surface of silicon wafer. Additionally, amines not only have an offensive odor and deteriorate the working environment, but also have a problem that the load to drain water treatment equipment is very high because the chemical oxygen demand (COD) of it is very high. Therefore, it can not be practically used.

### BRIEF SUMMARY OF THE INVENTION

The inventors of this invention have carried out an intensive study to overcome the above mentioned problems which conventional polishing compound has, and have found that the use of alkaline aqueous solution of colloidal silica containing fine particles of silicon oxide which has pH buffer action and have high electric conductivity as the solution of polishing compound can accomplish the stabilized polishing by higher removal rate. Further, have found that the method to add a combination of weak acid and hydroxide of alkali metal or ammonia is suited as the method to have a buffer action of pH as a stabilized alkaline aqueous solution and can improve the environmental contamination and can reduce the load to the drain water treatment equipment. That is, the object of this invention is to provide a polishing compound whose pH is stabilized, has high and stable polishing rate and easily treated by a conventional drain water treatment equipment. And, the another object of this invention is to provide a polishing method of using said polishing compound.

The above mentioned object can be accomplished by a polishing compound comprising, colloidal solution containing 1∼15 % by weight (wt.%) of 8∼500 nanometer (hereinafter shortened to nm) average diameter silicon oxide particles, said colloidal solution is prepared as a buffer solution which has buffering action between pH 8.7∼10.6 by adding a compound of weak acid and hydroxide of alkali metal or ammonia, wherein logarithms of reciprocal number of acid dissociation constant at 25°C of said weak acid is 8.0∼12.0. Further, it is possible to obtain a polishing compound which can accomplish the high removal speed keeping high quality surface and the load to a drain water treatment equipment is very low by adjusting electric conductivity of polishing compound to the level bigger than 20mS/m per 1 wt.% of silicon oxide. This polishing compound can be prepared, for example, by diluting concentrated solution of 15∼65 wt.% at every actual use.

Further, the another object of this invention can be accomplished by a polishing method of a work-piece such as silicon wafer by a polishing machine having two platens at upper and lower position or one platen whose surface is stuck with a polishing pad made by resin foam, synthetic leather or non-woven cloth and can rotate to the desired direction comprising, setting and pressing the work-piece to said polishing machine, rotating at least one of said platens and work-piece with a constant supply of said polishing compound.

### DETAIL DESCRIPTION OF THE INVENTION

The average diameter of silicon oxide fine particles contained in a colloidal solution of this invention is 8∼500 nm, desirably is 8∼200 nm. These fine particles of silicon oxide can be flocculated particles. When the average diameter is smaller than 8 nm, the colloidal solution becomes to flocculate easily and the stability as a polishing compound is deteriorated. And when the average diameter is between 200 and 500 nm, although the properties as the polishing compound are not affected, the preparation of stabilized compound is difficult and is not profitable from the view point of price. Further, when the average diameter is bigger than 500 nm, the particle is beyond the colloid region and is not suited as the polishing compound.

The concentration of silicon oxide fine particles whose surface are covered with aluminum is necessary to be 1∼15 wt.% and desirably 1∼10 wt.% when it is used at the practical polishing. When the concentration is lower than 1 wt.%, polishing speed becomes very slow and can not be practically used. On the contrary the polishing speed is improved along with the increase of the concentration of silicon oxide and when the concentration reaches to about 15 wt.% level, the polishing speed reaches to the saturated point and does not improved any more beyond this point. Fine particles of silicon which are generated as the polishing chips remain in the fluid of polishing compound, oxidized and becomes silicon oxide, which increase the concentration of silicon oxide of the solution. If the initial silicon oxide concentration of solution is high, since the silicon oxide concentration increases quickly during the polishing and consequently the recycled polishing solution is gelled quickly, the colloidal solution becomes unstable and the recycling use of the polishing compound is remarkably deteriorated, further is not profitable from the view point of price.

In this invention, it is necessary that pH of the polishing compound to be in the region from 8.7 to 10.6. If it is lower than 8.7, the polishing speed becomes remarkably slow and is out of the practical use. And if pH becomes higher than 10.6, since colloid of silica has a tendency to flocculate and hurt the stability of polishing compound and also is out of practical use. Further, pH of the polishing compound must not be easily effected by the considerable change of the external condition such as friction, heat, contact with atmosphere and mixing with other composition. The important point of the present invention is to make a polishing compound as a solution which has a strong buffering effect to maintain pH within narrow region against the change of the external condition. In the present invention, it is necessary that the logarithm of inverse number (pKa) of acid dissociation constant (Ka) at 25°C of weak acid is within the limits of 8.0 ∼12.0. When pKa at 25°C is smaller than 8.0, large quantity of weak acid and hydroxide of alkali metal or ammonia is needed to increase pH of the solution. And when pKa at 25°C is bigger than 12.0, it is difficult to prepare a buffer solution which has strong buffering effect to stabilize pH value within the limits of 8.7∼10.6.

As an example of the weak acid to be used for the preparation of a polishing compound of this invention which has a buffering effect, boric acid (pKa=9.24), carbonic acid (pKa=10.33), phosphoric acid (pKa=12.35), water soluble organic acid and mixture of these acids can be mentioned. As the base to be used, hydroxide of alkali metal or ammonia and a mixture of them can be mentioned. To form a buffer solution of this invention, salts alone or combination of salts and base or salts and acid can be added. Said salts means the salts formed by a weak acid whose pKa at 25°C is within the limits of 8.0 ∼12.0 and a hydroxide of alkali metal or ammonia. Concretely, for example, sodium carbonate (Na₂CO₃), sodium hydrogen-carbonate (NaHCO₃), potassium carbonate (K₂CO₃), potassium hydrogen-carbonate (KHCO₃), ammonium carbonate [(NH₃)₂CO₃], ammonium hydrogen-carbonate (NH₃HCO₃) and sodium borate (NaBO₂) can be mentioned, however not limited to them. These salts dissociate to a weak acid and a hydroxide of alkali metal or ammonia in aqueous solution. And, these salts can be used together with in the limitation that not to destroy the buffer solution. The important point of this invention is not to use an organic compound such as amines as a base. Namely, in this invention, basically, said weak acid and inorganic compound e.g. hydroxide of alkali metal or ammonia is used. Especially, since organic composition such as amines which deteriorate the chemical oxygen demand (COD) is not contained in this polishing compound, it can be said that the excellent compound from the view point of environmental contamination. Chemical oxygen demand (COD) is recognized as the proper index of the environmental contamination when the compound is discharged as the wasted water. COD value of the polishing compound of this invention at the concentration of actual use is smaller than 20 ppm. Further, since the polishing compound of this invention does not contain amines of offensive odor, the improvement of working environmental is remarkable. And the damage of metal part of the equipment by corrosion is very small.

In the present invention, the polishing rate can be remarkably improved by increasing the electric conductivity of polishing compound. The term of electric conductivity of this invention indicates the easiness for electric current conducting through the solution, and corresponds to inverse number of the electric resistance per one unit length. And in the present invention, the value of electric conductivity is represented by electric conductivity per one unit length (micro . Siemens) converted to 1 wt.% of silicon oxide. In this invention, it is desirable that the electric conductivity is bigger than 25mS/m/1%-SiO₂ for the improvement of polishing speed, and more desirable region is bigger than 40mS/m/1%-SiO₂. As a method to increase the electric conductivity, following two methods can be mentioned. That is, one is a method to make the concentration of buffer solution higher and another one is a method to add salts.

The concentration of buffer solution can be made higher, by adding the combined solution of (1) weak acid and strong base, (2) strong acid and weak base or (3) weak acid and weak base without changing a molar ratio of acid and base.

Salts which is used as the method to add salts is composed by a combination of acid and base. As an acid, both strong acid and weak acid can be used, and mineral acid, organic acid and a mixture of them can be mentioned. As a base, hydroxide of alkali metal or ammonia and a mixture of them can be used.

Above mentioned two methods can be used together with.

The buffer solution of this invention is formed by the combination of weak acid and strong base, and is explained as the state that the weak acid is dissociated as an ion and partially un-dissociated in the solution. And the feature of buffer solution of this invention is that the pH value is not influenced by the mixing of small amount of acid or base are mixed.

To improve the physical property of the polishing compound of this invention, surfactant, dispersing agent or anti sedimentation agent can be used together with. As a surfactant, a dispersing agent and an anti sedimentation agent water soluble organic composition or inorganic layered compound can be mentioned. Further, the polishing compound of this invention is an aqueous solution, however, it is possible to add organic solvent. The polishing compound of this invention can be prepared at the each practical use by mixing colloidal silica, base, additives and water. And, in general, a polishing compound having 15∼65 % high concentration is prepared and at the each practical use, it can be usually diluted by water or by a mixture of water and organic solvent.

### DETAIL DESCRIPTION OF THE EXAMPLES

The polishing compound and the polishing method with use of said polishing compound of this invention will be understood more readily with reference to the Examples and the Comparative Examples, however these Examples are only intended to illustrate the invention and not be construed to limit the scope of the invention.

The polishing compound used in the Examples and the Comparative Examples are prepared by following procedure. As the colloidal silica, the product of 15 nm average diameter and 30 wt.% concentration which is on market is used. To 500g of said colloidal silica, 1500g of DI water is added and stirred, then salts formed by a weak acid and a hydroxide of alkali metal or ammonia, acid, base and other additives are added. Adjust to 3000g by adding DI water, thus the solutions of polishing compound to be used in the Examples are prepared.

Polishing condition is illustrated as follows.
Polishing machine : SH-24 type single sided polishing machine (product of Speedfam Co., Ltd.)
Rotating speed of platen : 70RPM
Rotating speed of pressure plate : 50RPM
Polishing pad : SUBA400 (product of Rodel. Nitta Co., Ltd.)
Surface pressure : 400g/cm²
Flow rate of polishing compound : 80mL/min
Polishing time : 10 minutes
Work-piece : 4 inch diameter silicon wafer (after etched)

pH of the polishing compound is measured by a pH meter which is adjusted by pH standard solutions of 6.86 and 9.18. Electric conductivity is measured by a electric conductivity meter.

The surface quality of polished surface is inspected by naked eye of an inspector and haze and pit are checked. And the polishing speed is calculated from the difference of silicon wafer weight between before polishing and after polishing.

### Example 1 and Comparative Example 1

In the experiment number 1 and 2 of this Example, a solution of colloidal polishing compound is prepared based on above mentioned procedure, then potassium carbonate (K₂CO₃) and potassium hydrogen-carbonate (KHCO₃) are added by the recipe indicated in Table 1, thus the solutions of polishing compound of this invention are obtained. For the comparison, in the experiment number 3, a solutions of polishing compound to which only tetramethyl-ammoniumhydroxide (hereinafter shortened to TMAOH) is added is prepared. And in the experiment number 4, a silicon wafer polishing compound which is on the market is diluted by DI water so as the concentration of silicon oxide to be 5 wt.% is used as a solution of polishing compound. By the polishing method mentioned above, polishing experiments are carried out. In each experiment, the solution is circulated for 10 times and the polishing speed, pH and surface quality of work-piece are measured after each circulation. The experimental results are summarized in Table 1. As clearly understood from the results, in the experiment numbers 1 and 2 which are the Examples of this invention, the change of pH is comparatively slow and polishing speed is stable even if the polishing compound is circulated. On the contrary, in the experiment numbers 3 and 4 which are the Comparative Example of this invention, the dropping down of pH value is remarkably big and accordingly the deterioration of polishing speed is also remarkably big. Meanwhile, the surface quality of the work-piece obtained from all experiment numbers are good.

**Table 1**

| | | Example 1 | | | | Comparative Example 1 | | | |
|---|---|---|---|---|---|---|---|---|---|
| Experiment No. | | 1 | | 2 | | 3 | | 4 | |
| additive/quantity (mol/Kg-SiO₂) | | K₂CO₃/0.144 KHCO₃/0.079 | | K₂CO₃/0.288 KHCO₃/0.010 | | TMAOH/0.005 | | diluted polishing compound*** | |
| pH | | 10.0 | | 10.5 | | 10.4 | | 10.4 | |
| electric conductivity* | | 41 | | 65 | | 18 | | 10 | |

| experimental results | | polish speed** | pH | polish speed** | pH | polish speed** | pH | polish speed** | pH |
|---|---|---|---|---|---|---|---|---|---|
| circulation number of polishing solution | 0 | 0.31 | 10.0 | 0.38 | 10.5 | 0.34 | 10.4 | 0.35 | 10.4 |
| | 1 | 0.32 | 9.9 | 0.37 | 10.4 | 0.33 | 9.9 | 0.34 | 10.0 |
| | 2 | 0.31 | 9.8 | 0.36 | 10.4 | 0.33 | 9.7 | 0.34 | 9.8 |
| | 3 | 0.31 | 9.8 | 0.36 | 10.3 | 0.33 | 9.6 | 0.35 | 9.7 |
| | 4 | 0.32 | 9.7 | 0.36 | 10.3 | 0.32 | 9.5 | 0.35 | 9.6 |
| | 5 | 0.31 | 9.7 | 0.35 | 10.2 | 0.32 | 9.4 | 0.34 | 9.5 |
| | 6 | 0.31 | 9.7 | 0.35 | 10.2 | 0.31 | 9.3 | 0.34 | 9.4 |
| | 7 | 0.30 | 9.6 | 0.35 | 10.1 | 0.31 | 9.2 | 0.35 | 9.3 |
| | 8 | 0.31 | 9.6 | 0.34 | 10.1 | 0.30 | 9.1 | 0.32 | 9.3 |
| | 9 | 0.30 | 9.5 | 0.35 | 10.1 | 0.29 | 9.0 | 0.30 | 9.2 |
| | 10 | 0.29 | 9.5 | 0.35 | 10.0 | 0.29 | 9.0 | 0.29 | 9.1 |

| | | | | | | | | | |
|---|---|---|---|---|---|---|---|---|---|
| * mS/m/1%-SiO₂ | | | | | | | | | |
| ** Polishing speed µm/min | | | | | | | | | |
| *** silicon wafer polishing compound on the market | | | | | | | | | |

### Example 2

Potassium carbonate (K₂CO₃), potassium hydrogen-carbonate (KHCO₃), sodium borate (NaBO₂) and potassium sulfate (K₂SO₄), are added based on the combination and quantity shown in Table 2 to said colloidal solution of polishing compound, thus the polishing compounds of this invention are obtained. The polishing experiments of silicon wafer are carried out based on the above mentioned method. In the experiments of this Example, the recycling experiments are not carried out. Obtained results are summarized in Table 2.

**Table 2**

| Example 2 | | | | | | | | | |
|---|---|---|---|---|---|---|---|---|---|
| Experiment No. | | 5 | 6 | 7 | 8 | 9 | 10 | 11 | 12 |
| Additive* | K₂CO₃ | 0.144 | 0.288 | 0.144 | 0.206 | | | 0.144 | 0.144 |
| | NaBO₂ | | | | | 0.144 | 0.288 | | |
| | KHCO₃ | 0.014 | 0.010 | | 0.010 | | | 0.014 | 0.014 |
| | K₂SO₄ | | | | | | | 0.144 | 0.288 |
| pH | | 10.0 | 10.5 | 10.1 | 10.2 | 10.1 | 10.1 | 10.0 | 10.0 |
| Electric conductivity** | | 41 | 65 | 41 | 52 | 25 | 33 | 70 | 101 |
| polishing speed (µm/min) | | 0.32 | 0.37 | 0.34 | 0.38 | 0.31 | 0.34 | 0.33 | 0.35 |
| surface quality | | good | good | good | good | good | good | good | good |

| | | | | | | | | | |
|---|---|---|---|---|---|---|---|---|---|
| * quantity ; mol/Kg-SiO₂ | | | | | | | | | |
| ** mS/m/1%-SiO₂ | | | | | | | | | |

### Comparative Example 2

Likely to Example 2, additives indicated by Table 3 are added and polishing compounds are prepared. The polishing compound of experiment numbers 13 does not have a buffering effect and the electric conductivity is low, and in the experiment numbers 14∼18 additives are not added by the combination of weak acid/strong base, strong acid/weak base or weak acid/weak base but by one component alone, and especially in the experimental numbers 14 and 15 amines is used. In the experiment number 18, likely to the experiment number 4 of Comparative Example 1, a silicon wafer polishing compound which is on the market is diluted by DI water so as the concentration of silicon oxide to be 5 wt.% is used as a solution of polishing compound. The polishing experiments of silicon wafer are carried out likely to the Example 2. The obtained experimental results are summarized in Table 3.

**Table 3**

| Comparative Example 2 | | | | | | |
|---|---|---|---|---|---|---|
| Experiment No. | 13 | 14 | 15 | 16 | 17 | 18 |
| additive/quantity (mol/Kg-SiO₂) | no | diethanol amine/0.24 | monoethanol amine/0.24 | TMAOH/0.007 | K₂SO₄/0.144 | polishing compound on market no additive |
| pH | 9.7 | 10.2 | 10.4 | 10.2 | 9.7 | 10.4 |
| Electric conductivity* | 8 | 20 | 22 | 16 | 48 | 10 |
| polishing speed (µm/min) | 0.20 | 0.36 | 0.37 | 0.26 | 0.20 | 0.34 |
| surface quality | good | good | good | good | good | good |

| | | | | | | |
|---|---|---|---|---|---|---|
| * mS/m/1%-SiO₂ | | | | | | |

It is clearly understood from the results shown in Table 2 and Table 3, the polishing compounds which are in the limit of this invention show good polishing speed. In the meanwhile, as shown in Comparative Example 2, the polishing compound whose pH value is adjusted but the buffering effect is not sufficient or the polishing compound whose electric conductivity is lower than 25mS/m/1%-SiO₂, the polishing speed is not sufficient. Further, as shown in the experiment number 16 and 17, the polishing compound whose electric conductivity alone is risen by adding salt does not have an effect to improve the polishing speed too. The experimental number 14 and 15 which use amine alone show good results from the view point of polishing speed, however, the value of chemical oxygen demand (COD) is at high level of bigger than 200 ppm, and by the specific offensive odor of amine the working environment becomes very bad; further, the corrosion problem of metal part of equipment is observed. Therefore, the polishing compound containing amine is not suited to the object of this invention.

### Effect of the Invention

As illustrated above, the polishing compound of this invention contains silicon oxide particles of 8∼500 nm average diameter and acid and base which forms buffering solution between pH 8.7∼10.6 region, and the silica concentration at the actual use is adjusted to 1∼15 wt.%. By making the polishing compound itself a buffering solution and by making the electric conductivity larger, the polishing compound whose pH change is small and has high polishing speed can be obtained. By the polishing compound of this invention, a silicon wafer and a wafer of device substrate of semiconductor can be polished continuously by high speed without deteriorating the surface quality. And the environmental contamination by wasted water from the polishing machine is very little.

## Claims

1. A polishing compound comprising, colloidal solution containing 1∼15 % by weight (wt.%) of 8∼500 nm average diameter silicon oxide particles, said colloidal solution is prepared as a buffer solution which has buffering action between pH 8.7∼10.6 by adding a component of weak acid and hydroxide of alkali metal or ammonia, wherein logarithms of reciprocal number of acid dissociation constant at 25°C of said weak acid is 8.0∼12.0.

2. The polishing compound of claim 1, wherein the electronic conductivity at 25°C is bigger than 25mS/m par 1 wt.% of silicon oxide.

3. A preparation method of the polishing compound of claim 2 whose electronic conductivity at 25°C is bigger than 25mS/m par 1 wt.% of silicon oxide, making the concentration of solution high or by adding salts.

4. A preparation method of the polishing compound of claim 1 by diluting a polishing compound comprising a colloidal solution containing 15∼65 wt.% of silicon oxide particles of 8∼500 nm average diameter, wherein said colloidal solution is prepared as a buffer solution which has buffering action by the addition of weak acid and hydroxide of alkali metal or ammonia, and logarithms of reciprocal number of acid dissociation constant at 25°C of said weak acid is 8.0∼ 12.0, with water, organic solvent, salts or the mixture of them.

5. A polishing method of silicon wafer, pressing said silicon wafer to a rotatable platen of polishing machine having one or two platens on which a polishing pad such as porous resin sheet, synthetic leather sheet or non-woven cloth is stuck, and rotating at least one of said platen and said silicon wafer under the constant supply of the polishing compound of claim 1.
